(19) Europäisches Patentamt
European Patent Office
Office européen des brevets

(11) Veröffentlichungsnummer: **0 271 771 B1**

(12) **EUROPÄISCHE PATENTSCHRIFT**

(45) Veröffentlichungstag der Patentschrift: **17.07.91**

(51) Int. Cl.5: **F16K 41/10**, F16K 1/52, F16K 47/08

(21) Anmeldenummer: **87117807.5**

(22) Anmeldetag: **02.12.87**

(54) **Heisswasserventil.**

(30) Priorität: **17.12.86 DE 3643123**

(43) Veröffentlichungstag der Anmeldung:
**22.06.88 Patentblatt 88/25**

(45) Bekanntmachung des Hinweises auf die
Patenterteilung:
**17.07.91 Patentblatt 91/29**

(84) Benannte Vertragsstaaten:
**DE FR IT**

(56) Entgegenhaltungen:
AT-B- 237 981          DE-A- 2 113 394
DE-B- 1 151 520        DE-B- 1 600 784
US-A- 3 179 124        US-A- 3 528 087

(73) Patentinhaber: **Concordia Fluidtechnik GmbH**
**Talstrasse 41**
**W-7000 Stuttgart 1(DE)**

(72) Erfinder: **Nill, Rudolf**
**Lindenstrasse 23**
**W-7320 Göppingen Faurndau(DE)**

(74) Vertreter: **Tetzner, Volkmar, Dr.-Ing. Dr. jur.**
**Van-Gogh-Strasse 3**
**W-8000 München 71(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Heißwasserventil zur Befestigung an einer Heißwasserzuführleitung, insbesondere für eine Verwendung bei Getränkeautomaten, gemäß dem Oberbegriff des Patentanspruches 1.

Heißwasserventile der vorausgesetzten Art sind aus der Praxis in verschiedenen Ausführungsformen bekannt. Insbesondere bei einer Verwendung an bzw. in Getränkeautomaten muß ein solches Ventil auf unterschiedliche Durchflußmengen einstellbar sein.

Dies wird üblicherweise dadurch erreicht, daß im Bereich des Abflußrohres oder direkt in diesem Abflußrohr eine Art Drosselschraube als Drosseleinrichtung eingebaut ist. Es hat sich nun gezeigt, daß eine solche Drosseleinrichtung sehr stark zum Verkalken neigt, was noch verstärkt wird, wenn durch eine solche Drosseleinrichtung der Durchflußquerschnitt unsymmetrisch verändert wird. Getränkeautomaten erfordern daher allein für das Heißwasserventil eine verstärkte laufende Wartung und Überwachung, was jedoch erheblichen Zeitaufwand und unerwünschte Stillstandszeiten mit sich bringt.

Der Erfindung liegt daher die Aufgabe zugrunde, ein Heißwasserventil der im Oberbegriff des Patentanspruches 1 vorausgesetzten Art zu schaffen, das sich bei relativ einfacher Konstruktion und relativ leichter Anbaubarkeit vor allem dadurch auszeichnet, daß seine wesentlichen Teile sich weitgehend oder sogar vollkommen selbständig von Kalkablagerungen freihalten.

Diese Aufgabe wird erfindungsgemäß durch die im Kennzeichen des Anspruches 1 angegebenen Merkmale gelöst.

Bei einem Heißwasserventil der vorausgesetzten Art neigen vor allem der Bereich Ventilkegel/Ventilsitz sowie die Drosseleinrichtung zu erhöhter Kalkablagerung. Erfindungsgemäß ist daher zum einem der Ventilstößel mitsamt seinem Ventilkegel von einer Dichtmanschette aus nachgiebigem, gummielastischem Dichtungsmaterial umgeben, das im Bereich des Ventilkegels verdickt ist. Bei dieser Ausführung bildet somit der den Ventilkegel umgebende Teil der Dichtmanschette gleichzeitig die Sitzdichtung gegenüber dem Ventilsitz innerhalb des Ventilgehäuses. Aufgrund der deutlichen Materialverdickung im Bereich des Ventilkegels erfolgt hier beim Schließen des Ventils eine verstärkte elastische Verformung, die zum Absprengen eines eventuell gebildeten Kalkansatzes in diesem Bereich führt.

Zum anderen ist die Drosseleinrichtung erfindungsgemäß durch eine rohrförmige Drosselmanschette aus ebenfalls gummielastischem Material gebildet, die im mittleren Abschnitt ihrer Länge tailliert ausgeführt ist und unter Anwendung axialer Zusammendrückkräfte in ihrem Durchflußquerschnitt veränderbar ist. Diese erfindungsgemäß ausgebildete Taillierung führt in der Praxis dazu, daß bei einem axialen Zusammendrücken dieser Drosselmanschette deren Durchflußquerschnitt symmetrisch etwa in Form einer Venturidüse verengt wird, d.h. diese Drosselmanschette, die in ihrem entspannten Zustand eine etwa zylindrische, rohrförmige Gestalt besitzt, kann in Abhängigkeit von den auf sie angewendeten axialen Zusammendrückkräften kontinuierlich und stufenlos von ihrem vollen Durchflußquerschnitt bis zu einem nahezu oder vollkommen geschlossenen Durchflußquerschnitt verändert werden. Es ergibt sich dadurch nicht nur eine äußerst gute und feinfühlige Einstellmöglichkeit für unterschiedliche Heißwasser-Durchflußmengen, sondern gleichzeitig auch die Möglichkeit, Tendenzen zur Kalkablagerung an der Innenseite der Drosselmanschette deutlich herabzusetzen; falls überhaupt ein Kalkansatz an der Innenwand dieser Drosselmanschette auftreten sollte, dann kann dieser ohne Demontage der entsprechenden Ventilteile auf einfache Weise dadurch abgesprengtwerden, daß ganz bewußt die Drosselmanschette in axialer Richtung zusammengedrückt und dadurch deformiert wird.

Weitere Einzelheiten der Erfindung sind Gegenstand der Unteransprüche.

Die Erfindung sei im folgenden anhand der Zeichnung näher beschrieben. In dieser Zeichnung zeigen

Fig. 1     eine zum Teil geschnittene Seitenansicht des an einer Zuführleitung befestigten Heißwasserventiles;

Fig. 2     eine Querschnittsansicht des Heißwasser- Ventiles etwa entlang der Linie II-II in Fig. 1.

Bei dem in der Zeichnung veranschaulichten Ausführungsbeispiel sei angenommen, daß das Heißwasserventil 1 an einer Heißwasserzuführleitung 2 in noch näher zu erläuternder Weise befestigt ist, wobei diese Heißwasserzuführleitung 2 Teil eines üblichen Getränkeautomaten oder Teil einer sogenannten Verteilerleiste bei Getränkeautomaten sein kann.

Dieses Heißwasserventil 1 enthält ein Ventilgehäuse 3 mit einem Heißwassereinlauf 4, der an die Heißwasserzuführleitung 2 angeschlossen ist, sowie mit einem etwa vertikal an dieses Ventilgehäuse 3 nach unten angeschlossenen Abflußrohr 5. Am oberen Ende dieses Abflußrohres 5 ist im Übergangsbereich vom Innenraum 6 des Ventilgehäuses 3 in das Abflußrohr 5 ein Ventilsitz 7 ausgebildet.

Oben auf das Ventilgehäuse 3 ist eine elektrische Betätigungseinrichtung 8 mit einem in Richtung des Doppelpfeiles 9a auf- und abbewegbaren Magnetanker 9 befestigt, dessen unteres Ende in Form eines Ventilstößels 10 ausgebildet ist, nach unten in den Innenraum 6 des Ventilgehäuses 3 hineinragt und an seinem freien Ende eine Art Ventilkegel 11 trägt. Dieser Ventilkegel 11 ist so ausgebildet, daß er innerhalb des Ventilgehäuses 3 mit Hilfe der Betätigungseinrichtung 8 (und über Magnetanker 9 und Ventilstößel 10) in eine untere Verschlußstellung gegen den Ventilsitz 7 bewegt werden kann.

Der den Innenraum 6 des Ventilgehäuses 3 durchsetzende Ventilstößel 10 ist mitsamt dem Ventilkegel 11 von einer Dichtmanschette 12 aus nachgiebigem, gummielastischem Dichtungsmaterial umgeben, wobei der den Ventilkegel 11 umgebende untere Teil 12a dieser Dichtmanschette 12 im Material gegenüber dem Material des Manschettenmantels 12b deutlich verdickt ist.

Innerhalb des Abflußrohres 5 ist eine Drosseleinrichtung in Form einer Drosselmanschette 13 angeordnet, die zum Einstellen des Durchflußquerschnittes dieses Abflußrohres 5 dient. Die rohrförmige Drosselmanschette 13 ist ebenfalls aus gummielastischem Material hergestellt, und sie ist im mittleren Abschnitt ihrer Länge - wie in der Zeichnung zu erkennen ist - tailliert ausgeführt, und zwar derart, daß sie unter Anwendung axialer Zusammendrückkräfte in ihrem Durchflußquerschnitt veränderbar ist, wobei sie sich dann in Form einer Lavaldüse verengt (bei veränderlichem freien Querschnitt).

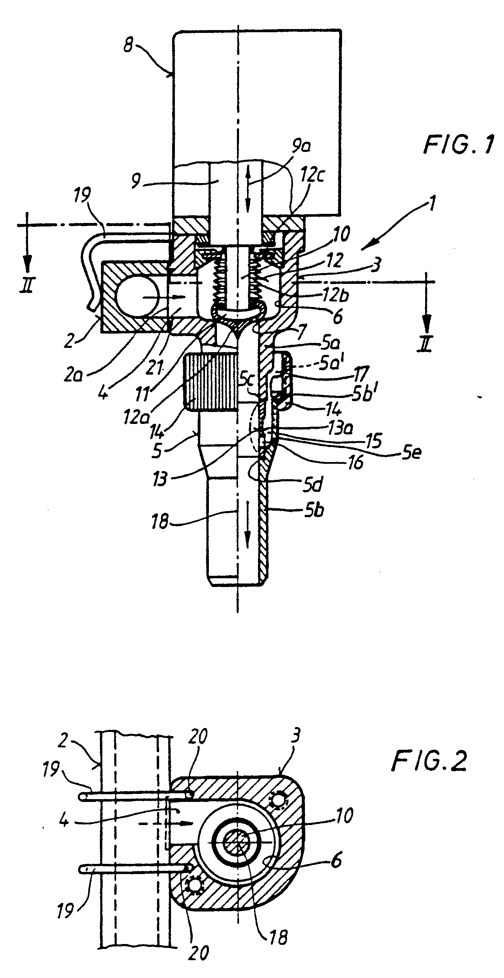

Wie in Fig. 1 zu erkennen ist, ist das Abflußrohr 5 in einen oberen Rohrteil 5a und einen unteren Rohrteil 5b unterteilt, wobei diese beiden Rohrteile 5a, 5b koaxial untereinanderliegen. Zwischen diesen beiden Abflußrohrteilen 5a und 5b ist die Drosselmanschette 13 als eine Art Verbindungsrohrstück angeordnet, wobei die beiden Abflußrohrteile 5a und 5b durch eine Überwurfmutter 14 miteinander verbunden, indem diese Überwurfmutter 14 einen oberen, flanschartigen Bund 5b' des unteren Rohrteiles 5b untergreift und auf ein Außengewinde 5a' am unteren Ende des oberen Rohrteiles 5a aufgeschraubt ist. Durch diese Verbindung können die beiden Abflußrohrteile 5a und 5b in ihrer axialen Relativlage zueinander derart verstellt werden, daß sie axiale Zusammendrückkräfte auf die beiden Stirnenden der Drosselmanschette 13 ausüben, so daß letztere - wie oben erläutert - in ihrem Durchflußquerschnitt in gewünschter Weise veränderbar ist.

Die Drosselmanschette 13 weist vorzugsweise im entspannten Zustand einen Innendurchmesser auf, der etwa gleich dem Innendurchmesser des Abflußrohres 5 ist. Ferner sind in die gegeneinander weisenden Stirnenden der beiden Abflußrohrteile 5a und 5b -wie bei 5c bzw. 5d in Fig. 1 angedeutet - Formausdrehungen eingearbeitet, in denen die entsprechend geformten Stirnenden der Drosselmanschette 13 aufgenommen und zuverlässig gehaltert sind.

In Fig. 1 ist ferner zu erkennen, daß das obere Verbindungsende 5e des unteren Abflußrohrteiles 5b in seinem Innendurchmesser derart erweitert und so ausgebildet ist, daß es die Drosselmanschette 13 unter Bildung eines Ringraumes 15 umgibt. Die Drosselmanschette 13 weist hierbei im Bereich ihrer Taillierung 13a, und zwar vorzugsweise etwas unterhalb dieser Taillierung 13a, jedoch im Bereich des Ringraumes 15 wenigstens ein, vorzugsweise mehrere über den Umfang verteilte Belüftungslöcher 16 auf. Ferner ist auf der Außenumfangsseite am unteren Ende des oberen Abflußrohrteiles 5a sowie innerhalb des Bereiches der Überwurfmutter 14 (also an dem Teil, an dem das Außengewinde 5a' vorgesehen ist) wenigstens ein (vorzugsweise mehrere) den Ringraum 15 mit der Ventilaußenseite verbindender axialer Belüftungskanal 17 vorgesehen.

Durch diese von den Belüftungslöchern 16, den Ringraum 15 und die Belüftungskanäle 17 gebildete Belüftungsverbindung zwischen dem Innern des Abflußrohres 5 und der Ventilaußenseite wird ein Leerlaufen des Ventiles erreicht und ein Spritzen der Flüssigkeit beim Einlaufen in ein Trinkgefäß mit einfachen konstruktiven Mitteln vermieden. Da ferner die Belüftungslöcher 16 im Bereich des engsten Querschnittes der sich bildenden(Venturi-)Düse, nämlich im Bereich der Taillierung 13a der Drosselmanschette 13 (bzw. kurz danach) angeordnet sind, wird auch mit Sicherheit bei einem Rückstau der abfließenden Flüssigkeit eine Verunreinigung des Geräteinnern eines zugehörigen Getränkeautomaten bzw. der zugehörigen Heißwasserzuführleitung 2 vermieden.

Eine besonders einfache Bedienung, d. h. ohne Verwendung zusätzlicher Hilfsmittel oder Werkzeuge für eine Veränderung des Durchflußquerschnittes der Drosselmanschette 13 kann vor allem dadurch erreicht werden, daß die Überwurfmutter 14 als leicht zu bedienende Rändel-Überwurfmutter ausgebildet ist.

Die Drosselmanschette 13 und die Dichtmanschette 12 können aus gleichen Materialien hergestellt sein, insbesondere aus Gummi oder gummiartigem Kunststoffmaterial (z. B. Silikonkautschuk).

Der Innenraum 6 des Ventilgehäuses 3 ist - wie eine gemeinsame Betrachtung der Fig. 1 und 2 erkennen läßt - etwa in Form eines Zylinders mit vertikaler Achse 18 ausgeführt, die gleichzeitig die vertikale Ventilachse bildet und die mit den Mittelachsen des Ventilstößels 10, des Ventilkegels 11, des Ventilsitzes 7 und des Abflußrohres 5 zusammenfällt. Der Heißwassereinlauf 4 ist dabei vorzugsweise tangential an den zylindrischen Innenraum 6 des Ventilgehäuses 3 herangeführt, wie Fig.2 zeigt. Diese tangentiale Zuordnung des Heißwassereinlaufes 4 zum Ventilgehäuse-Innenraum 6 hat den Vorteil, daß im Bereich oberhalb des Ventilkegels 11 Kalkablagerung dadurch zumindest weitgehend vermieden werden, daß beim Betätigen dieses Ventiles 1 ein Potentialwirbel entsteht, der Kalkablagerungen erschwert.

Die in diesem Ventilgehäuse-Innenraum 6 befindliche Dichtmanschette 12 ist ferner vorzugsweise so ausgebildet, daß sie im Bereich des Ventilstößels 10 einen im wesentlichen zylindrischen Mantel 12b in Form eines in seiner axialen Länge veränderbaren Faltenbalges (wie in Fig. 1 angedeutet) aufweist, und zwar ausgehend von dem den Ventilkegel 11 umschließenden, im Material verdickten unteren Manschettenteil 12a. Hierbei ist dann das obere Ende 12c dieses Manschettenmantels als ringförmiger Dichtungsflansch ausgebildet, der - zusammen mit dem unteren Verbindungsende der elektrischen Betätigungseinrichtung 8 - im wesentlichen das obere Ende vom Innenraum 6 des Ventilgehäuses 3 dichtend abschließt.

Wie weiter oben bereits angedeutet wurde, ist dieses Heißwasserventil 1 auf äußerst einfache Weise über eine Art Schnappverbindung lösbar mit der Heißwasserleitung 2 verbunden. Für diese Schnappverbindung weist das Ventilgehäuse 3 wenigstens eine federelastische Klammer, vorzugsweise - wie Fig. 2 zeigt - jedoch zwei federelastische Klammern 19 auf, die in Bohrungen 20 des Gehäuses 3 eingesteckt bzw. gehalten sein können. Diese Klammern 19 umfassen federelastisch und nach Art einer Schnappverbindung zumindest einen Teil der Heißwasserzuführleitung 2 derart, daß eine zuverlässige Halterung des ganzen Heißwasserventiles 1 an der Zuführleitung sichergestellt ist. Hierbei ist der Heißwassereinlauf 4 des Ventiles 1 unter Zwischenanordnung eines Dichtringes 21 dichtend an eine Anschlußöffnung 2a der Heißwasserzuführleitung 2 angeschlossen.

Die Federelastischen Klammern 19 können aus jedem geeigneten Material hergestellt sein, beispielsweise aus Federdraht, Federbandstahl, federelastischem Kunststoffmaterial (z. B. Polyazetal oder Polykarbonat) oder dergleichen.

Schließlich sei noch hinzugefügt, daß die verhältnismäßig dicke Ausbildung des gummielastischen Materiales am Ventilkegel dadurch besonders begünstigt werden kann, daß dieser Ventilkegel (11) - wie in Fig. 1 veranschaulicht - an seinen Ecken eine besonders starke Verrundung aufweist.

## Patentansprüche

1. Heißwasserventil zur Befestigung an einer Heißwasserzuführleitung, insbesondere für eine Verwendung bei Getränkeautomaten, enthaltend

a) ein Ventilgehäuse (3), das einen Heißwassereinlauf (4) und ein etwa vertikales Abflußrohr (5) aufweist,

b) einen am oberen Ende des Abflußrohres (5) im Ventilgehäuse (3) ausgebildeten Ventilsitz (7),

c) einen mit einer Betätigungseinrichtung (8) verbundenen Ventilstößel (10) mit einem Ventilkegel (11), der innerhalb des Ventilgehäuses in eine Ruhestellung gegen den Ventilsitz (7) bewegbar ist,

d) eine innerhalb des Abflußrohres (5) angeordnete Drosseleinrichtung (13) zum Einstellen des Durchflußquerschnittes dieses Rohres,

gekennzeichnet durch folgende Merkmale:

e) der das Ventilgehäuse (3) durchsetzende Ventilstößel (10) mitsamt dem Ventilkegel (11) ist von einer Dichtmanschette (12) aus nachgiebigem, gummielastischem Dichtungsmaterial umgeben, das im Bereich des Ventilkegels verdickt ist;

f) die Drosseleinrichtung wird durch eine rohrförmige Drosselmanschette (13) aus gummielastischem Material gebildet, die im mittleren Abschnitt ihrer Länge tailliert ausgeführt und unter Anwendung axialer Zusammendrückkräfte in ihrem Durchflußquerschnitt veränderbar ist.

2. Heißwasserventil nach Anspruch 1, dadurch gekennzeichnet, daß das Abflußrohr (5) zweigeteilt und die rohrförmige Drosselmanschette (13) zwischen den beiden Abflußrohrteilen (5a, 5b) als eine Art Verbindungsrohrstück angeordnet ist und daß die beiden Abflußrohrteile (5a, 5b) durch eine Überwurfmutter (14) verbunden und in ihrer axialen Relativlage zueinander derart verstellbar sind, daß sie axiale Zusammendrückkräfte auf die beiden Stirnenden der Drosselmanschette (13) ausüben.

3. Heißwasserventil nach Anspruch 2, dadurch gekennzeichnet, daß die Drosselmanschette (13) im entspannten Zustand einen Innendurchmesser aufweist, der etwa gleich dem Innendurchmesser des Abflußrohres (5) ist und daß in die gegeneinander weisenden Stirnenden der Abflußrohrteile (5a, 5b) Ausdrehungen (5c, 5d) zur Aufnahme der Drosselmanschettenenden eingearbeitet sind.

4. Heißwasserventil nach Anspruch 2, dadurch gekennzeichnet, daß das obere Verbindungsende (5e) des unteren Abflußrohrteiles (5b) in seinem Innendurchmesser derart erweitert und so ausgebildet ist, daß es die Drosselmanschette (13) unter Bildung eines Ringraumes (15) umgibt, wobei die Drosselmanschette (13) im Bereich der Taillierung (13a) und des Ringraumes (15) wenigstens ein radiales Belüftungsloch (16) aufweist und wobei auf der Außenumfangsseite am unteren Ende des oberen Abflußrohrteiles (5a) sowie innerhalb der Überwurfmutter (14) wenigstens ein den Ringraum (15) mit der Ventilaußenseite verbindender Belüftungskanal (17) vorgesehen ist.

5. Heißwasserventil nach Anspruch 2, dadurch gekennzeichnet, daß die Überwurfmutter als Rändel-Überwurfmutter (14) ausgebildet ist.

6. Heißwasserventil nach Anspruch 1, dadurch gekennzeichnet, daß der Innenraum (6) des Ventilgehäuses (3) etwa in Form eines Zylinders mit vertikaler Achse (18) ausgeführt ist, die mit den Mittelachsen des Ventilstößels (10), Ventilkegels (11), Ventilsitzes (7) und Abflußrohres (5) zusammenfällt und daß der Heißwassereinlauf (4) tangential an diesen zylindrischen Innenraum (6) herangeführt ist.

7. Heißwasserventil nach den Ansprüchen 1 und 6, dadurch gekennzeichnet, daß das Ventilgehäuse (3) wenigstens eine federelastische Klammer (19) für eine lösbare Schnappverbindung mit der Heißwasserzuführleitung (2) aufweist.

8. Heißwasserventil nach Anspruch 6, dadurch gekennzeichnet, daß die Dichtmanschette (12) im Bereich des Ventilstößels (10) einen im wesentlichen zylindrischen Mantel (12b) in Form eines in seiner axialen Länge veränderbaren Faltenbalges aufweist, wobei das obere Ende (12c) dieses Manschettenmantels als ringförmiger Dichtungsflansch ausgebildet ist, der im wesentlichen das obere Ende vom Innenraum (6) des Ventilgehäuses (3) dichtend abschließt.

## Claims

1. Hot water valve for fixing on a hot water supply pipe, particularly for use in automatic drink dispensers, comprising
    a) a valve housing (3) with a hot water inlet (4) and an approximately vertical discharge pipe (5),
    b) a valve seat (7) constructed at the upper end of the discharge pipe (5) in the valve housing (3),
    c) a valve stem (10) connected to an actuating device (8) and with a valve cone (11) which is movable within the valve housing into a rest position against the valve seat (7),
    d) a throttle arrangement (13) arranged within the discharge pipe (5) for adjusting the through flow crosssection of this pipe,
characterised by the following features:
    e) the valve stem (10) which passes through the valve housing (3) is enclosed together with the valve cone (11) by a sealing sleeve (12) which is made from flexible elastic rubber sealing material which is thicker in the region of the valve cone;
    f) the throttle arrangement is formed by a tubular throttle sleeve (13) made from elastic rubber material which is waisted in the central section of its length and can be varied in its through flow crosssection by the use of axial compression forces.

2. Hot water valve as claimed in claim 1, characterised in that the discharge pipe (5) is divided in two and the tubular throttle sleeve (13) is arranged between the two discharge pipe parts (5a, 5b) as a type of connecting pipe section, and the two discharge pipe parts (5a, 5b) are connected by a coupling nut (14) and can be adjusted in their axial position relative to one another in such a way that they exert axial compression forces on the two ends of the throttle sleeve (13).

3. Hot water valve as claimed in claim 2, characterised in that the throttle sleeve (13) in the relaxed state has an internal diameter which is approximately equal to the internal diameter of the discharge pipe (5), and that bores (5c, 5d) are machined into the ends of the discharge pipe parts (5a, 5b) to receive the ends of the throttle sleeve.

4. Hot water valve as claimed in claim 2, characterised in that the internal diameter of the upper connecting end (5e) of the lower discharge pipe part (5b) is widened and constructed in such a way that it surrounds the throttle sleeve (13), forming an annular space (15), the throttle sleeve (13) has at least one radial ventilation hole (16) in the region of the waisting (13a) and of the annular space (15), and at least one ventilation channel (17) connecting the annular space (15) to the outside of the valve is provided on the outer peripheral face at the lower end of the upper discharge pipe part (5a) as well as inside the coupling nut (14).

5. Hot water valve as claimed in claim 2, characterised in that the coupling nut is constructed as a knurled coupling nut (14).

6. Hot water valve as claimed in claim 1, characterised in that the interior (6) of the valve housing (3) is constructed approximately in the form of a cylinder with a vertical axis (18) which coincides with the central axes of the valve stem (10), valve cone (11), valve seat (7) and discharge pipe (5), and the hot water inlet is led tangentially to this cylindrical interior (6).

7. Hot water valve as claimed in claims 1 and 6, characterised in that the valve housing (3) has at least one resilient clip (19) for a releasable snap connection to the hot water supply pipe (2).

8. Hot water valve as claimed in claim 6, characterised in that in the region of the valve stem (10) the sealing sleeve (12) has a substantially cylindrical sheath (12b) in the form of a bellows which is variable in its axial length, the upper end (12c) of this sleeve sheath being constructed as an annular sealing flange which essentially closes and seals the upper end of the interior (6) of the valve housing (3).

## Revendications

1. Soupape se fixant sur une canalisation d'arrivée d'eau chaude et destinée en particulier à être utilisée sur des machines automatiques de distribution de boissons, comprenant:

   a) une cage de soupape (3) comportant une arrivée (4) d'eau chaude et un tuyau sensiblement vertical de sortie (5),

   b) un siège de soupape (7) réalisé à l'extrémité supérieure du tuyau de sortie (5), à l'intérieur de la cage (3),

   c) un poussoir de soupape (10) relié à un dispositif d'actionnement (8) et comportant un cône de soupape (11) qui est déplaçable à l'intérieur de la cage pour être mis en position de repos contre le siège (7),

   d) un dispositif d'étranglement (13) disposé à l'intérieur du tuyau de sortie (5) et destiné au réglage de la section de passage de ce tuyau,

   caractérisée par les particularités suivants:

   e) le poussoir de la soupape (10), qui passe dans la cage (3), est entouré conjointement avec le cône (11) de la soupape par une manchette d'étanchéité (12) en matériau souple, ayant l'élasticité du caoutchouc et comportant une surépaisseur dans la région cône de la soupape,

   f) le dispositif d'étranglement est formé d'une manchette tubulaire (13) en matériau ayant l'élasticité du caoutchouc, qui comporte à milongueur un resserrement et dont la section de passage est modifiable par application de forces axiales de compression.

2. Soupape à eau chaude selon la revendication 1, caractérisée en ce que le tuyau de sortie (5) est divisé en deux et la manchette tubulaire d'étranglement (13) est disposée entre les deux éléments du tuyau de sortie (5a, 5b) de manière à former un genre de tronçon de tube de liason et en ce que les deux éléments du tuyau de sortie (5a, 5b) sont réunis au moyen d'un écrou d'accouplement (14) et leur position relative axiale est réglable de telle manière qu'ils exercent des forces axiales de compression sur les deux extrémités de la manchette d'étranglement (13).

3. Soupape à eau chaude selon la revendication 2, caractérisée en ce que, lorsqu'elle n'est pas sous contrainte, la manchette d'étranglement (13) a un diamètre intérieur qui est sensiblement égal au diamètre intérieur du tuyau de sortie (5) et en ce que les extrémités tournées l'une vers l'autre des éléments du tuyau de sortie (5a, 5b) comportent des creusures (5c, 5d) de logement des extrémités de la manchette d'étranglement.

4. Soupape à eau chaude selon la revendication 2, caractérisée en ce que l'extrémité supérieure de liaison (5e) de l'élément inférieur du tuyau de sortie (5b) présente un élargissement de son diamètre intérieur et est conformée de manière qu'elle entoure la manchette d'étranglement (13) en formant une chambre annulaire (15), la manchette d'étranglement (13) comportant au moins un trou radial de ventilation (16) dans la région du resserrement (13a) et de la chambre annulaire (15) et au moins un canal de ventilation (17), qui relie la chambre annulaire (15) au côté extérieur de la soupape, étant prévu sur le côté circonférenciel extérieur, à l'extrémité inférieure de l'élément supérieur du tuyau de sortie (5a) ainsi qu'à l'intérieur de l'écrou d'accouplement (14).

5. Soupape à eau chaude selon la revendication 2, caractérisée en ce que l'écrou d'accouplement est conformé en écrou moleté (14).

6. Soupape à eau chaude selon la revendication 1, caractérisée en ce que le volume interne de la cage de la soupape (3) est réalisé sensiblement sous la forme d'un cylindre à axe vertical (18) qui coïncide avec les axes de symétrie du poussoir de la soupape (10), du cône de la soupape (11), du siège de la soupape (7) et du tuyau de sortie (5) et en ce que l'entrée d'eau chaude (4) débouche tangentiellement dans ce volume interne cylindrique (6).

7. Soupape à eau chaude selon les revendications 1 et 6, caractérisée en ce que la cage (3) de la soupape est équipée d'au moins une agrafe à ressort élastique (13) assurant une liaison amovible à déclic avec la conduite (2) d'arrivé d'eau chaude.

8. Soupape à eau chaude selon la revendication 6, caractérisée en ce que la manchette d'étanchéité (12) comporte, dans la région du poussoir (10) de la soupape, une enveloppe sensiblement cylindrique (12b) ayant la forme d'un soufflet dont la longueur axiale est variable, l'extrémité supérieure (12c) de cette enveloppe de manchette étant conformée en collerette annulaire d'étanchéité qui obture pratiquement l'extrémité supérieure du volume interne (6) de la cage (3) de la soupape de manière étanche.

FIG.1

FIG.2